# EUROPEAN PATENT APPLICATION

(11) **EP 4 502 234 A1**
(43) Date of publication of application: **05.02.2025**
(21) Application number: 22951393.2
(22) Date of filing: 18.07.2022
(51) Int. Cl.: C25B 1/04

(54) **METHOD AND DEVICE FOR CARBON CAPTURE COUPLED HYDROGEN PRODUCTION**

(71) Applicant: Xeca Turbo Technologies (beijing) Co., Ltd., Beijing 100012 (CN)
(72) Inventor: LV, Xijia, Beijing 102209 (CN); ZHUANG, Shuxian, Beijing 102209 (CN); ZHANG, Junwei, Beijing 102209 (CN); ZHANG, Hao, Beijing 102209 (CN); ZHAO, Tu, Beijing 102209 (CN); LIU, Yifan, Beijing 102209 (CN); CHEN, Shen, Beijing 102209 (CN); BAI, Yakui, Beijing 102209 (CN)
(74) Representative: Murgitroyd & Company
(86) International application number: PCT/CN2022/106277
(87) International publication number: WO 2024/016114

(57) **Abstract**

Disclosed are a method and an apparatus for carbon capture coupled hydrogen production. The method includes: capturing low-concentration CO₂ by a solution of an alkali metal hydroxide to obtain a low-concentration CO₂ absorption solution; capturing high-concentration CO₂ by a first portion of the low-concentration CO₂ absorption solution to obtain a high-concentration CO₂ absorption solution; and performing electrolysis by a second portion of the low-concentration CO₂ absorption solution as a catholyte solution, using the high-concentration CO₂ absorption solution as an anolyte, and using a non-ionic diaphragm as a diaphragm. According to the method, capture of CO₂ in a wide concentration range can be realized; electrolysis is performed by a non-ionic diaphragm, to implement regeneration of an absorption solution coupled hydrogen production; capture costs of CO₂ in a wide concentration range can be reduced; additional products of H₂ and O₂ can be obtained; and hydrogen production costs can be reduced.

## Description

### FIELD OF THE INVENTION

The present disclosure relates to the field of carbon capture technologies, and specifically, to a method and an apparatus for carbon capture coupled hydrogen production.

### BACKGROUND OF THE INVENTION

Currently, global warming is one of major environmental problems of the world. Carbon dioxide is a major greenhouse gas. Existing technologies of carbon capture, utilization and storage (CCUS), especially Direct Air Capture technology as well as hydrogen production by electrolysis of water are too expensive to promote, and corresponding storage, transportation and consumption technologies are immature, which severely limits development of these technologies. Currently, a liquid amine solvent-based adsorption method is a major carbon dioxide capture method. However, being highly corrosive, toxic, and volatile and having high costs, an existing liquid amine solvent whose regeneration consumes a great deal of energy is a major obstacle to development of the capture technology. Moreover, the foregoing method can be used for capturing carbon dioxide from only flue gas or the like in which carbon dioxide has relatively high enrichment, but cannot be applied to capture of carbon dioxide from air or the like in which carbon dioxide has low enrichment. According to an airborne carbon dioxide capture technology developed in recent years, carbon dioxide is adsorbed by using a liquid alkaline solution and a solid amine membrane, and CO₂ in a wide enrichment range can be captured.

However, the foregoing airborne carbon dioxide capture technology has the following problem: a great deal of energy is consumed in regenerating a carbon dioxide adsorbent. When a solid amine membrane is used as an adsorbent for capturing carbon dioxide in air, economic costs of the technology in commercial utilization are high because costs of an amine adsorbent are high. In another technical route, a liquid alkali solution is used as an absorption solution, and an adsorbent is regenerated via a chemical reaction including the following two steps: Step 1: carbon dioxide is combined with the alkali solution to form a carbonate solution. At the same time, an absorption solution is regenerated; Step 2: calcium hydroxide reacts with the carbonate solution obtained in the first step, to form calcium carbonate precipitate. Then, calcination is carried out to form high-purity carbon dioxide and regenerate calcium hydroxide. In this technical route, calcination of calcium carbonate requires high energy consumption and massive device investment, and thus having high economic costs.

In WO2011123817A3 and CN102605383A, an alkaline ion exchange membrane is used for carbon capture. However, the membrane has severe use conditions and high costs, and thus having no commercial utilization value. In AU2009290161B2, an alkaline ion exchange membrane is used; and carbon dioxide enters an electrolytic cell in a gaseous form, and is combined with an alkaline solution in the cell via a gas diffusion layer, to form a NaOH-NaHCO₃-Na₂CO₃ mixed solution. However, no high-purity alkaline solution can be formed for regeneration; and because a concentration of carbon dioxide required for supplementation is relatively high, electrolysis cannot be implemented after capture of carbon dioxide in air. In US9095813B2, an alkaline solution-based absorption technology is used; and two chemical loops are required for reducing a gas adsorbent. As a result, system design is complex; construction costs are high; and it is hard to implement a control system. Moreover, a regeneration chemical loop requires heat supply for 900°C combustion, greatly increasing energy loss and carbon emission; and a calcium oxide adsorbent is easy to deactivate, causing a great need of calcium carbonate for supplementation. In US20170113184A1 and EP2160234A1, an airborne CO₂ capture apparatus also adopts a solid membrane-based capture technology; and steam is required for reducing an absorbent. As a result, CO₂ emission is also increased; and only a problem in capturing CO₂ can be resolved, but a problem in using CO₂ cannot be resolved.

In a conventional technology, there is also the following solution: potassium hydroxide is used to absorb CO₂, thereby obtaining potassium carbonate. Then, potassium carbonate is electrolyzed via an ionic membrane, where a mixed solution of potassium bicarbonate and potassium carbonate, and gases of O₂ and CO₂ are generated in an anode; and H₂ and a KOH solution are obtained in a cathode. Therefore, regeneration of an absorption solution is achieved. However, there are following three problems: Problem 1: to avoid reaction between potassium bicarbonate in the anode and potassium hydroxide in the cathode in an electrolysis process, in most cases, an ion exchange membrane is used to separate a catholyte chamber from an anolyte chamber, but costs of an ionic membrane are relatively high because the ionic membrane is expensive, and mainly because use conditions of the ionic membrane are severe. Moreover, a complex purification process also limits an application range of the ionic membrane. Problem 2: generally, when KOH absorbs low-concentration CO₂, for example, CO₂ in air, only a KOH-K₂CO₃ mixed solution can be obtained, and it is hard to completely convert KOH into K₂CO₃. As a result, a utilization rate of KOH is too low. To completely convert KOH into potassium carbonate, air throughput needs to be increased, which makes both a CO₂ absorption rate and CO₂ utilization efficiency in a later period too low. Problem 3: if a mixed solution of potassium carbonate that contains a specific content of potassium hydroxide is introduced into an anolyte solution, efficiency of acidizing potassium carbonate in the anode is reduced.

### BRIEF DESCRIPTION OF THE INVENTION

The present disclosure mainly aims to provide a method and an apparatus for carbon capture coupled hydrogen production, to resolve the problem that capture costs of CO₂ in a wide concentration range and hydrogen production costs are relatively high in .

To achieve the foregoing objective, according to an aspect of the present disclosure, a method for carbon capture coupled hydrogen production is provided, including the following steps: step S1: capturing low-concentration CO₂ by using a solution of an alkali metal hydroxide, to obtain a low-concentration CO₂ absorption solution, where the low-concentration CO₂ absorption solution contains an alkali metal carbonate and the alkali metal hydroxide; step S2: dividing the low-concentration CO₂ absorption solution into a first portion of the low-concentration CO₂ absorption solution and a second portion of the low-concentration CO₂ absorption solution; and capturing high-concentration CO₂ by using the first portion of the low-concentration CO₂ absorption solution, to obtain a high-concentration CO₂ absorption solution, where the high-concentration CO₂ absorption solution contains the alkali metal carbonate and an alkali metal bicarbonate; and step S3: performing electrolysis by using the second portion of the low-concentration CO₂ absorption solution as a catholyte solution, using the high-concentration CO₂ absorption solution as an anolyte solution, and using a non-ionic diaphragm as a diaphragm, to obtain H₂ and a cathodic discharge liquid at an electrolytic cathode, and obtain O₂, CO₂, and an anodic discharge liquid at an electrolytic anode; and performing step S1 by using the cathodic discharge liquid, where the cathodic discharge liquid contains the alkali metal carbonate and the alkali metal hydroxide; and the anodic discharge liquid contains the alkali metal carbonate and the alkali metal bicarbonate.

Further, the alkali metal hydroxide is KOH, the alkali metal carbonate is K₂CO₃, and the alkali metal bicarbonate is KHCO₃; or the alkali metal hydroxide is NaOH, the alkali metal carbonate is Na₂CO₃, and the alkali metal bicarbonate is NaHCOs.

Further, in step S2, the first portion of the low-concentration CO₂ absorption solution accounts for 10% to 90% of the low-concentration CO₂ absorption solution by volume percent.

Further, step S3 further includes: performing electrolysis by using the anodic discharge liquid as the anolyte solution, where preferably, a concentration of carbonate radicals in the catholyte solution ranges from 0.1 M to 6 M, and a concentration of hydroxy radicals in the catholyte solution ranges from 0.1 M to 10 M; and more preferably, the concentration of carbonate radicals in the catholyte solution ranges from 0.5 M to 3 M, and the concentration of hydroxy radicals in the catholyte solution ranges from 3 M to 7 M; and preferably, a concentration of carbonate radicals in the anolyte solution ranges from 0.1 M to 6.5 M, and a concentration of bicarbonate radicals in the anolyte solution ranges from 0.1 M to 3 M; and more preferably, the concentration of carbonate radicals in the anolyte solution ranges from 2 M to 5 M, and the concentration of bicarbonate radicals in the anolyte solution ranges from 0.6 M to 1.5 M.

Further, the non-ionic diaphragm is one or more of a porous polymer diaphragm, a Zirfon film, a polyphenylene sulfide film, a polysulfone film, or a polyether sulfone film; preferably, the non-ionic diaphragm is the porous polymer diaphragm; and more preferably, a polymer layer on a surface of the porous polymer diaphragm is one or more of a carboxylate ion resin layer, polyphenylene sulfide, polysulfone, or polyether sulfone.

According to another aspect of the present disclosure, an apparatus for carbon capture coupled hydrogen production is provided, including: a low-concentration CO₂ absorption unit, having an inlet for a solution of an alkali metal hydroxide, an inlet for a first to-be-captured raw material that contains low-concentration CO₂, an outlet for a first portion of a low-concentration CO₂ absorption solution, an outlet for a second portion of the low-concentration CO₂ absorption solution, and an outlet for a first exhaust gas, where the low-concentration CO₂ absorption unit is configured to capture low-concentration CO₂ by using the solution of the alkali metal hydroxide, to obtain the low-concentration CO₂ absorption solution; and the low-concentration CO₂ absorption solution contains an alkali metal carbonate and the alkali metal hydroxide; a high-concentration CO₂ absorption unit, having an inlet for the first portion of the low-concentration CO₂ absorption solution, an inlet for a second to-be-captured raw material that contains high-concentration CO₂, an outlet for a high-concentration CO₂ absorption solution, and an outlet for a second exhaust gas, where the inlet for the first portion of the low-concentration CO₂ absorption solution is connected to the outlet for the first portion of the low-concentration CO₂ absorption solution; the high-concentration CO₂ absorption unit is configured to capture high-concentration CO₂ by using the first portion of the low-concentration CO₂ absorption solution, to obtain the high-concentration CO₂ absorption solution; and the high-concentration CO₂ absorption solution contains the alkali metal carbonate and an alkali metal bicarbonate; and an electrolysis unit, having an inlet for a catholyte solution, a non-ionic diaphragm, an inlet for an anolyte solution, an outlet for a cathodic discharge liquid, an outlet for an anodic discharge liquid, an outlet for H₂, and an outlet for a mixed gas of O₂ and CO₂, where the inlet for the catholyte solution is connected to the outlet for the second portion of the low-concentration CO₂ absorption solution; the outlet for the catholyte solution is connected to the inlet for the solution of the alkali metal hydroxide; the inlet for the anolyte solution is connected to the outlet for the high-concentration CO₂ absorption solution; and the electrolysis unit is configured to electrolyze the second portion of the low-concentration CO₂ absorption solution and the high-concentration CO₂ absorption solution, to obtain H₂ and the cathodic discharge liquid at an electrolytic cathode, and obtain O₂, CO₂, and the anodic discharge liquid at an electrolytic anode, where the cathodic discharge liquid contains the alkali metal carbonate and the alkali metal hydroxide; and the anodic discharge liquid contains the alkali metal carbonate and the alkali metal bicarbonate.

Further, the low-concentration CO₂ absorption unit includes a low-concentration absorption tower, where the inlet for the solution of the alkali metal hydroxide and the outlet for the first exhaust gas are formed in a top of the low-concentration absorption tower; and the inlet for the first to-be-captured raw material that contains low-concentration CO₂, the outlet for the first portion of the low-concentration CO₂ absorption solution, and the outlet for the second portion of the low-concentration CO₂ absorption solution are formed in a bottom of the low-concentration absorption tower; and the high-concentration CO₂ absorption unit includes a high-concentration absorption tower, where the inlet for the first portion of the low-concentration CO₂ absorption solution and the outlet for the second exhaust gas are formed in a top of the high-concentration absorption tower; and the inlet for the second to-be-captured raw material that contains high-concentration CO₂ and the outlet for the high-concentration CO₂ absorption solution are formed in a bottom of the high-concentration absorption tower.

Further, the electrolysis unit includes an electrolytic cell, having a cathode chamber and an anode chamber; the non-ionic diaphragm is disposed between the cathode chamber and the anode chamber; the electrolytic cathode is disposed in the cathode chamber; the electrolytic anode is disposed in the anode chamber; the cathode chamber has the inlet for the catholyte solution, the outlet for the cathodic discharge liquid, and the outlet for H₂; and the anode chamber has the inlet for the anolyte solution, the outlet for the anodic discharge liquid, and the outlet for the mixed gas of O₂ and CO₂.

Further, the high-concentration CO₂ absorption unit further includes a high-concentration CO₂ absorption solution tank, disposed on a pipeline through which the inlet for the anolyte solution is connected to the outlet for the high-concentration CO₂ absorption solution, and disposed on one side of the outlet for the high-concentration CO₂ absorption solution.

Further, the electrolysis unit further includes a cathodic feed liquid tank, disposed on a pipeline through which the inlet for the catholyte solution is connected to the outlet for the second portion of the low-concentration CO₂ absorption solution; and/or a cathodic discharge liquid tank, disposed on a pipeline through which the outlet for the catholyte solution is connected to the inlet for the solution of the alkali metal hydroxide; and/or an anodic liquid storage tank, disposed on a pipeline through which the inlet for the anolyte solution is connected to the outlet for the high-concentration CO₂ absorption solution, and disposed on one side of the inlet for the anolyte solution.

According to the technical solutions of the present disclosure, in one aspect, CO₂ in a wide concentration range that includes low-concentration CO₂ and high-concentration CO₂ can be absorbed and captured by using an alkaline solution as an absorbent; and in another aspect, a non-ionic diaphragm is used to electrolyze low-concentration CO₂ and high-concentration CO₂, and product absorption coupled hydrogen production are performed, so that an absorption solution can be regenerated, and high-concentration CO₂ as well as additional products of H₂ and O₂ can be obtained. According to the present disclosure, a low-concentration CO₂ absorption solution is used as a catholyte solution, and a high-concentration CO₂ absorption solution is used as an anolyte solution. Under a condition that no ionic membrane is used, a concentration increase of CO₃²⁻ in an electrolytic cathode can restrain substance diffusion caused by a concentration difference, so that diffusion of HCO₃⁻ and CO₃²⁻ from the electrolytic anode to the cathode is reduced. Moreover, in preference to OH⁻, CO₃²⁻ having more electric charges undergoes electromigration, so that electromigration of CO₃²⁻ to the anode is reduced. Electrolyzing a working fluid obtained after capture of carbon dioxide can not only regenerate an alkaline absorption solution and obtain a high-purity product gas, but also recycle a capture solution and reduce regeneration costs of the absorption solution. In addition, usage of the non-ionic diaphragm greatly reduces costs of an electrolytic cell, avoids severe restriction imposed by an ionic membrane on the electrolyte solution and the electrolytic cell, and simplifies an impurity removal purification process of the CO₂ absorption solution, thereby further reducing CO₂ capture costs. In summary, according to the method of the present disclosure, capture of CO₂ in a wide concentration range can be realized; electrolysis is performed by using a non-ionic diaphragm, to implement regeneration of an absorption solution coupled hydrogen production; capture costs of CO₂ in a wide concentration range can be reduced; additional products of H₂ and O₂ can be obtained; and hydrogen production costs can be reduced.

### BRIEF DESCRIPTION OF THE DRAWINGS

The accompanying drawing of this specification which constitutes a part of the present disclosure provides further understanding of the present disclosure. The schematic example of the present disclosure and description thereof are intended to explain the present disclosure and are not intended to constitute an improper limitation to the present disclosure. In the accompanying drawing:

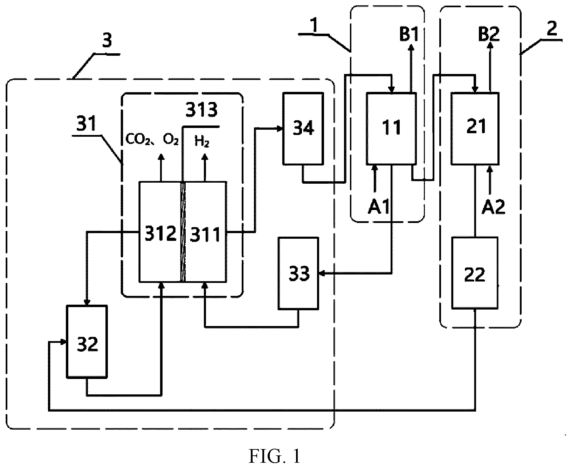

FIG. 1 is schematic diagram of an apparatus for CO₂ capture coupled hydrogen production according to an example of the present disclosure.

Reference numerals in the foregoing drawing are as follows:
1: low-concentration CO₂ absorption unit; 2: high-concentration CO₂ absorption unit; 3: electrolysis unit; 11: low-concentration absorption tower; 21: high-concentration absorption tower; 22: high-concentration CO₂ absorption solution tank; 31: electrolytic cell; 32: anodic liquid storage tank; 33: cathodic feed liquid tank; 34: cathodic discharge liquid tank; 311: cathode chamber; 312: anode chamber; and 313: non-ionic diaphragm.

### DETAILED DESCRIPTION OF THE EMBODIMENTS

It should be noted that, on the premise of no conflict, the embodiments and the features thereof in the present disclosure may be combined with each other. The present disclosure is described below in detail with reference to the accompanying drawings and the embodiments.

It should be noted that, in the specification and claims of the present disclosure, terms such as "first" and "second" are intended only to distinguish between similar objects but do not necessarily indicate a specific order or sequence. It should be understood that data termed in such a way is interchangeable under appropriate circumstances, so that the embodiments of the present disclosure described herein can be implemented in other orders than the order illustrated or described herein. Moreover, the terms "include", "have", and any variants thereof mean to cover the non-exclusive inclusion, for example, a process, method, system, product, or device that includes a series of steps or units is not necessarily limited to those expressly listed steps or units, but may include other steps or units not expressly listed or inherent to such a process, method, system, product, or device. In addition, solution-related terms "more", "less", "medium concentration", "low concentration", and "high concentration" in the specification and claims of the present disclosure represent a relatively high concentration, a relatively low concentration, and a relatively medium concentration of related solutions in different steps, but do not impose restriction on specific concentrations.

It should be noted that, terms "low-concentration CO₂" and "high-concentration CO₂" in the specification and claims of the present disclosure are merely used to distinguish between CO₂-containing materials that have different concentrations of CO₂. For example, "low-concentration CO₂" may mean that a volume concentration of carbon dioxide is 1% or less than 1% (for example, CO₂ in air); and "high-concentration CO₂" may mean that a volume concentration of carbon dioxide is greater than 1% (for example, CO₂ in flue gas). "1%" is not an absolute value distinguishing between low-concentration CO₂ and high-concentration CO₂, is merely used as an example, and may be adjusted according to an actual condition in an actual operation process.

It should be noted that, "solution" in the present disclosure is an aqueous solution unless otherwise specified.

As described in BACKGROUND OF THE INVENTION of the present disclosure, capture costs of CO₂ in a wide concentration range and hydrogen production costs are relatively high in a conventional technology. To resolve the foregoing problem, in a typical implementation of the present disclosure, a method for carbon capture coupled hydrogen production is provided, including the following steps: step S1: capturing low-concentration CO₂ by using a solution of an alkali metal hydroxide, to obtain a low-concentration CO₂ absorption solution, where the low-concentration CO₂ absorption solution contains an alkali metal carbonate and the alkali metal hydroxide; step S2: dividing the low-concentration CO₂ absorption solution into a first portion of the low-concentration CO₂ absorption solution and a second portion of the low-concentration CO₂ absorption solution; and capturing high-concentration CO₂ by using the first portion of the low-concentration CO₂ absorption solution, to obtain a high-concentration CO₂ absorption solution, where the high-concentration CO₂ absorption solution contains the alkali metal carbonate and an alkali metal bicarbonate; and step S3: performing electrolysis by using the second portion of the low-concentration CO₂ absorption solution as a catholyte solution, using the high-concentration CO₂ absorption solution as an anolyte solution, and using a non-ionic diaphragm as a diaphragm, to obtain H₂ and a cathodic discharge liquid at an electrolytic cathode, and obtain O₂, CO₂, and an anodic discharge liquid at an electrolytic anode; and performing step S1 by using the cathodic discharge liquid, where the cathodic discharge liquid contains the alkali metal carbonate and the alkali metal hydroxide; and the anodic discharge liquid contains the alkali metal carbonate and the alkali metal bicarbonate.

According to the present disclosure, first, low-concentration CO₂ is captured by using a solution of an alkali metal hydroxide, to obtain a low-concentration CO₂ absorption solution that contains an alkali metal carbonate and the alkali metal hydroxide, where the alkali metal hydroxide is not completely converted into the alkali metal hydroxide; and then, high-concentration CO₂ is captured by using a first portion of the low-concentration CO₂ absorption solution, to obtain a high-concentration CO₂ absorption solution that contains the alkali metal carbonate and an alkali metal bicarbonate, where a content of the alkali metal bicarbonate is low. Therefore, absorption and capture of CO₂ in a wide concentration range including a low concentration and a high concentration are realized. Electrolysis is performed by using the other portion of the low-concentration CO₂ absorption solution as a catholyte solution, using the high-concentration CO₂ absorption solution as an anolyte solution, and using a non-ionic diaphragm as an electrolyte diaphragm; and a hydrogen evolution reaction of the low-concentration CO₂ absorption solution that contains the alkali metal carbonate and the alkali metal hydroxide occurs in a cathode, to generate H₂. At the same time, under the action of an electric field force, alkali metal ions in the anolyte solution cross the diaphragm, enter the electrolytic cathode, and form regenerated alkali metal hydroxide with OH⁻ generated in a hydrogen evolution and reduction reaction of water molecules, where an alkali metal carbonate-alkali metal hydroxide mixed solution having an increased concentration of the alkali metal hydroxide is obtained in the electrolytic cathode; and O₂, CO₂, and an alkali metal carbonate-alkali metal bicarbonate regenerated solution are obtained at an anode of an electrolytic cell.

In one aspect, CO₂ in a wide concentration range that includes low-concentration CO₂ and high-concentration CO₂ can be absorbed and captured by using an alkaline solution as an absorbent. In another aspect, a non-ionic diaphragm is used to electrolyze low-concentration CO₂ and high-concentration CO₂, and product absorption coupled hydrogen production are performed, so that an absorption solution can be regenerated, and high-concentration CO₂ as well as additional products of H₂ and O₂ can be obtained. According to the present disclosure, a low-concentration CO₂ absorption solution is used as a catholyte solution, and a high-concentration CO₂ absorption solution is used as an anolyte solution. Under a condition that no ionic membrane is used, a concentration increase of C0₃²⁻ in an electrolytic cathode can restrain substance diffusion caused by a concentration difference, so that diffusion of HCO₃⁻ and CO3²⁻ from the electrolytic anode to the cathode is reduced. Moreover, in preference to OH⁻, CO₃²⁻ having more electric charges undergoes electromigration, so that electromigration of CO₃²⁻ to the anode is reduced. Electrolyzing a working fluid obtained after capture of carbon dioxide can not only regenerate an alkaline absorption solution and obtain a high-purity product gas, but also recycling a capture solution and reduce regeneration costs of the absorption solution. In addition, usage of the non-ionic diaphragm greatly reduces costs of an electrolytic cell, avoids severe restriction imposed by an ionic membrane on the electrolyte solution and the electrolytic cell, and simplifies an impurity removal purification process of the CO₂ absorption solution, thereby further reducing CO₂ capture costs. In summary, according to the method of the present disclosure, capture of CO₂ in a wide concentration range can be realized; electrolysis is performed by using a non-ionic diaphragm, to implement regeneration of an absorption solution coupled hydrogen production; capture costs of CO₂ in a wide concentration range can be reduced; additional products of H₂ and O₂ can be obtained; and hydrogen production costs can be reduced.

The alkali metal in the present disclosure may be Li, Na, K, or Rb. For the purposes of further improving effects of absorbing CO₂ and electrolyzing an absorption solution, and further reducing costs, the alkali metal is preferably K or Na. In a preferred implementation, the alkali metal hydroxide is KOH, the alkali metal carbonate is K₂CO₃, and the alkali metal bicarbonate is KHCO₃; or the alkali metal hydroxide is NaOH, the alkali metal carbonate is Na₂CO₃, and the alkali metal bicarbonate is NaHCOs. In an example in which the alkali metal hydroxide is KOH, Reaction formulas in operation of the method of the present disclosure are as follows:
Capture of low-concentration CO₂: CO₂ + 2KOH → K₂CO₃ + H₂O, where KOH is not converted completely, and a KOH-K₂CO₃ mixed solution is obtained.
Capture of high-concentration CO₂: CO₂ + KOH → KHCO₃, remaining KOH is converted completely, and a K₂CO₃-KHCO₃ mixed solution is obtained.

### Electrolysis:

Cathodic reaction: 4H₂O + 4K⁺ + 4e⁻ → 2H₂ + 4KOH.
Anodic reaction: 2K₂CO₃ - 4e⁻ → 4K⁺ + O₂ + 2CO₂.
Total reaction of the electrolysis: 2K₂CO₃ + 4H₂O → 4KOH + 2H₂ + O₂ + 2CO₂.

To allocate the low-concentration CO₂ absorption solution more reasonably, in a preferred implementation, in step S2, the first portion of the low-concentration CO₂ absorption solution accounts for 10% to 90% of the low-concentration CO₂ absorption solution by volume percent; and high-concentration CO₂ capture is performed on a solution that contains an appropriate amount of unreacted alkali metal hydroxide, so that electrolytic volumes of the high-concentration CO₂ absorption solution used as the anolyte solution and the low-concentration CO₂ absorption solution used as the catholyte solution fit each other better.

In a preferred implementation, step S3 further includes: performing electrolysis by using the anodic discharge liquid as the anolyte solution, thereby recycling the anodic discharge liquid. Preferably, a concentration of carbonate radicals in the catholyte solution ranges from 0.1 M to 6 M, and a concentration of hydroxy radicals in the catholyte solution ranges from 0.1 M to 10 M; and more preferably, the concentration of carbonate radicals in the catholyte solution ranges from 0.5 M to 3 M, and the concentration of hydroxy radicals in the catholyte solution ranges from 3 M to 7 M; and preferably, a concentration of carbonate radicals in the anolyte solution ranges from 0.1 M to 6.5 M, and a concentration of bicarbonate radicals in the anolyte solution ranges from 0.1 M to 3 M; and more preferably, the concentration of carbonate radicals in the anolyte solution ranges from 2 M to 5 M, and the concentration of bicarbonate radicals in the anolyte solution ranges from 0.6 M to 1.5 M. This further facilitates capture of CO₂ in a wide concentration range using the solution of the alkali metal hydroxide, and fast performance of an electrolysis process, without increasing energy consumed in electrolysis due to a high ion concentration and an increase of viscosity.

As described above, according to the method for carbon capture coupled hydrogen production of the present disclosure, because the catholyte solution and the anolyte solution are absorption solutions having different concentrations of CO₂, a good electrolysis effect can be achieved without using an ion exchange membrane that has high costs; and restriction of severe use conditions of an ionic membrane is avoided. In a preferred implementation, the non-ionic diaphragm is one or more of a porous polymer diaphragm, a Zirfon film, a polyphenylene sulfide film, a polysulfone film, or a polyether sulfone film; preferably, the non-ionic diaphragm is the porous polymer diaphragm; and more preferably, a polymer layer on a surface of the porous polymer diaphragm is one or more of a carboxylate ion resin layer, polyphenylene sulfide, polysulfone, or polyether sulfone. Carboxylate radicals or the like that carry negative charges may assist in diffusion of OH⁻ in the cathode to the anode, thereby helping improve current efficiency. The foregoing non-ionic diaphragm may further reduce costs while ensuring electrolysis efficiency.

In another typical implementation of the present disclosure, an apparatus for carbon capture coupled hydrogen production is further provided. As shown in FIG. 1, the apparatus includes: a low-concentration CO₂ absorption unit 1, having an inlet for a solution of an alkali metal hydroxide, an inlet for a first to-be-captured raw material that contains low-concentration CO₂, an outlet for a first portion of a low-concentration CO₂ absorption solution, an outlet for a second portion of the low-concentration CO₂ absorption solution, and an outlet for a first exhaust gas, where the low-concentration CO₂ absorption unit 1 is configured to capture low-concentration CO₂ by using the solution of the alkali metal hydroxide, to obtain the low-concentration CO₂ absorption solution; and the low-concentration CO₂ absorption solution contains an alkali metal carbonate and the alkali metal hydroxide; a high-concentration CO₂ absorption unit 2, having an inlet for the first portion of the low-concentration CO₂ absorption solution, an inlet for a second to-be-captured raw material that contains high-concentration CO₂, an outlet for a high-concentration CO₂ absorption solution, and an outlet for a second exhaust gas, where the inlet for the first portion of the low-concentration CO₂ absorption solution is connected to the outlet for the first portion of the low-concentration CO₂ absorption solution; the high-concentration CO₂ absorption unit 2 is configured to capture high-concentration CO₂ by using the first portion of the low-concentration CO₂ absorption solution, to obtain the high-concentration CO₂ absorption solution; and the high-concentration CO₂ absorption solution contains the alkali metal carbonate and an alkali metal bicarbonate; and an electrolysis unit 3, having an inlet for a catholyte solution, a non-ionic diaphragm, an inlet for an anolyte solution, an outlet for a cathodic discharge liquid, an outlet for an anodic discharge liquid, an outlet for H₂, and an outlet for a mixed gas of O₂ and CO₂, where the inlet for the catholyte solution is connected to the outlet for the second portion of the low-concentration CO₂ absorption solution; the outlet for the catholyte solution is connected to the inlet for the solution of the alkali metal hydroxide; the inlet for the anolyte solution is connected to the outlet for the high-concentration CO₂ absorption solution; and the electrolysis unit 3 is configured to electrolyze the second portion of the low-concentration CO₂ absorption solution and the high-concentration CO₂ absorption solution, to obtain H₂ and the cathodic discharge liquid at an electrolytic cathode, and obtain O₂, CO₂, and the anodic discharge liquid at an electrolytic anode, where the cathodic discharge liquid contains the alkali metal carbonate and the alkali metal hydroxide; and the anodic discharge liquid contains the alkali metal carbonate and the alkali metal bicarbonate.

In a use process, low-concentration CO₂ is captured in the low-concentration CO₂ absorption unit 1 by using the solution of the alkali metal hydroxide, to obtain the low-concentration CO₂ absorption solution that contains the alkali metal carbonate and the alkali metal hydroxide. Then, one portion of the low-concentration CO₂ absorption solution is introduced into the electrolytic cathode; the other portion of the low-concentration CO₂ absorption solution is introduced into the high-concentration CO₂ absorption unit 2, to absorb high-concentration CO₂, and obtain the high-concentration CO₂ absorption solution that contains the alkali metal carbonate and the alkali metal bicarbonate, where a content of the alkali metal bicarbonate is low; and the high-concentration CO₂ absorption solution is introduced into the electrolytic anode for electrolysis. An oxygen evolution reaction of an alkali metal carbonate-alkali metal bicarbonate mixed solution occurs in the anode, to obtain O₂, CO₂, and a mixed solution of low-concentration alkali metal carbonate and medium-concentration alkali metal bicarbonate. The mixed solution of the low-concentration alkali metal carbonate and the medium-concentration alkali metal bicarbonate is mixed with the high-concentration CO₂ absorption solution. The mixture is introduced into an anodic feed liquid apparatus, and then enters the electrolysis unit 3 for cycling. A hydrogen evolution reaction of an alkali metal carbonate-alkali metal hydroxide mixed solution occurs in the cathode, to obtain H₂, and the cathodic discharge liquid that contains the alkali metal carbonate and the alkali metal hydroxide, where a concentration of the alkali metal hydroxide is increased. Then, the cathodic discharge liquid enters the low-concentration CO₂ absorption unit 1, to continue capture of low-concentration CO₂. In the low-concentration CO₂ absorption unit, a mixed solution that contains less alkali metal carbonate and more alkali metal hydroxide is consumed by CO₂, to obtain a mixed solution that contains more alkali metal carbonate and more alkali metal hydroxide. One portion of the obtained solution enters the electrolytic cathode; and the other portion of the obtained solution enters the high-concentration CO₂ absorption unit 2. The cycle is repeated for continuous operation.

Gradient absorption of CO₂ in a wide concentration range can be realized by using the foregoing apparatus. Electrolysis is performed by using the non-ionic diaphragm, to implement regeneration of the KOH absorption solution, so that capture costs of CO₂ in a wide concentration range can be reduced. Coupling hydrogen production is performed, to obtain additional products of H₂ and O₂, thereby reducing hydrogen production costs. A flow rate of the first portion of the low-concentration CO₂ absorption solution may be adjusted by using a flow regulating valve.

Specifically, as shown in FIG. 1, in a preferred implementation, the low-concentration CO₂ absorption unit 1 includes a low-concentration absorption tower 11, where the inlet for the solution of the alkali metal hydroxide and the outlet for the first exhaust gas are formed in a top of the low-concentration absorption tower 11; and the inlet for the first to-be-captured raw material that contains low-concentration CO₂, the outlet for the first portion of the low-concentration CO₂ absorption solution, and the outlet for the second portion of the low-concentration CO₂ absorption solution are formed in a bottom of the low-concentration absorption tower 11; and the high-concentration CO₂ absorption unit 2 includes a high-concentration absorption tower 21, where the inlet for the first portion of the low-concentration CO₂ absorption solution and the outlet for the second exhaust gas are formed in a top of the high-concentration absorption tower 21; and the inlet for the second to-be-captured raw material that contains high-concentration CO₂ and the outlet for the high-concentration CO₂ absorption solution are formed in a bottom of the high-concentration absorption tower 21.

In a preferred implementation, the electrolysis unit 3 includes an electrolytic cell 31, having a cathode chamber 311 and an anode chamber 312, where the non-ionic diaphragm 313 is disposed between the cathode chamber 311 and the anode chamber 312; the electrolytic cathode is disposed in the cathode chamber 311; the electrolytic anode is disposed in the anode chamber 312; the cathode chamber 311 has the inlet for the catholyte solution, the outlet for the cathodic discharge liquid, and the outlet for H₂; and the anode chamber 312 has the inlet for the anolyte solution, the outlet for the anodic discharge liquid, and the outlet for the mixed gas of O₂ and CO₂.

In a preferred implementation, the high-concentration CO₂ absorption unit 2 further includes a high-concentration CO₂ absorption solution tank 22, disposed on a pipeline through which the inlet for the anolyte solution is connected to the outlet for the high-concentration CO₂ absorption solution, and disposed on one side of the outlet for the high-concentration CO₂ absorption solution.

In a preferred implementation, the electrolysis unit 3 further includes a cathodic feed liquid tank 33, disposed on a pipeline through which the inlet for the catholyte solution is connected to the outlet for the second portion of the low-concentration CO₂ absorption solution; and/or a cathodic discharge liquid tank 34, disposed on a pipeline through which the outlet for the catholyte solution is connected to the inlet for the solution of the alkali metal hydroxide; and/or an anodic liquid storage tank 32, disposed on a pipeline through which the inlet for the anolyte solution is connected to the outlet for the high-concentration CO₂ absorption solution, and disposed on one side of the inlet for the anolyte solution.

The first to-be-captured raw material A1 containing low-concentration CO₂ enters the absorption tower 11, and is captured by the solution of the alkali metal hydroxide fed herein, to obtain the first exhaust gas B1 to be exhausted, and obtain the low-concentration CO₂ absorption solution that contains the alkali metal carbonate and the alkali metal hydroxide. One portion of the low-concentration CO₂ absorption solution is introduced into the cathodic feed liquid tank 33, and then enters the cathode chamber 311 for electrolysis. The other portion of the low-concentration CO₂ absorption solution is introduced into the absorption tower 22, to capture the second to-be-captured raw material A2 that contains high-concentration CO₂, thereby obtaining the second exhaust gas B2 to be exhausted, and obtaining the high-concentration CO₂ absorption solution that contains the alkali metal carbonate and the alkali metal bicarbonate, where a content of the alkali metal bicarbonate is low. One portion of the high-concentration CO₂ absorption solution is introduced into the high-concentration CO₂ absorption solution tank 22, then enters the anodic liquid storage tank 32, and finally enters the anode chamber 312 for electrolysis.

A hydrogen evolution reaction occurs in the cathode chamber 311, to obtain H₂, and the cathodic discharge liquid that contains the alkali metal carbonate and the alkali metal hydroxide, where a concentration of the alkali metal hydroxide is increased. The cathodic discharge liquid enters the cathodic discharge liquid tank 34, and returns to the absorption tower 11, to continue capture of low-concentration CO₂. An oxygen evolution reaction occurs in the anode chamber 312, to obtain O₂, CO₂, and a mixed solution of low-concentration alkali metal carbonate and medium-concentration alkali metal bicarbonate. The mixed solution enters the anodic liquid storage tank 32, and then is recycled and enters the anode chamber 312 for electrolysis.

Concentrations of the catholyte solution and the anolyte solution may be controlled to be appropriate values via water replenishing and/or mixing ratio adjustment, thereby further improving electrolysis efficiency. In addition, the catholyte solution contains K₂CO₃ (> 0.5 M) having a specific concentration. Existence of CO₃²⁻ in the cathode may reduce and/or restrain diffusion of HCO₃⁻ and CO₃²⁻ in the anode to the cathode, but cannot completely avoid the diffusion. Therefore, in a preferred implementation, when electrolysis is not performed, the catholyte solution and the anolyte solution are pumped out of the electrolytic cell. In the anodic liquid storage tank, a ratio of the anodic discharge liquid to the high-concentration CO₂ absorption solution may range from 0.2:1 to 2:1. This facilitates cycling of the electrolysis process.

The method and apparatus for carbon capture coupled hydrogen production of the present disclosure have wide application prospects in the following application fields: the CO₂ capture and utilization field, the hydrogen energy field, and the like. Application scenarios that may be involved include, but are not limited to, the following: (1) in areas rich in renewable energy, such as wind energy and solar energy, and areas suitable for construction of nuclear power plants, the foregoing energy sources are used to generate electricity and capture CO₂ in air, thereby reducing a content of CO₂ in air while making full use of various energy sources; (2) Industrial flue gases of power plants, cement plants, metallurgic plants, and the like contain a large amount of CO₂ and medium- and low-temperature waste heat. When the method and apparatus of the present disclosure are used in the foregoing industrial fields, the waste heat of the flue gas is used as a heat source for regeneration of an alkaline solution absorbent, so that CO₂ capture can be performed without an additional heat source. Therefore, a dual objective of industrial energy conservation and CO₂ emission reduction is achieved; and a by-product hydrogen gas can also be obtained. (3) When the method and apparatus of the present disclosure are used in the energy storage field of renewable energy such as wind energy and solar energy, a gas product of the present disclosure contains CO₂ and H₂, and thus can be used to synthesize secondary fuel such as methanol. When the present disclosure is used in the energy storage field, renewable energy may be converted into fuel chemical energy for storage. This may resolve problems in aspects of energy storage stability, timeliness, transportation, or the like of the renewable energy.

The present disclosure is further described in detail below with reference to specific examples. These examples should not be understood as a limitation to the protection scope of the present disclosure.

### Example 1

An apparatus for CO₂ capture coupled hydrogen production in Example 1 is shown in FIG. 1.

Air that contained low-concentration CO₂ entered the absorption tower 11, and was captured by a KOH solution fed herein, to obtain a first exhaust gas B1 to be exhausted, and obtain a low-concentration CO₂ absorption solution that contains K₂CO₃ and KOH. One portion of the low-concentration CO₂ absorption solution was introduced into the cathodic feed liquid tank 33, and then entered the cathode chamber 311 for electrolysis. The other portion of the low-concentration CO₂ absorption solution was introduced into the absorption tower 22, to capture a flue gas that contained high-concentration CO₂, thereby obtaining a second exhaust gas B2 to be exhausted, and obtaining a high-concentration CO₂ absorption solution that contained K₂CO₃ and KHCO₃, where a content of KHCO₃ was low. One portion of the high-concentration CO₂ absorption solution was introduced into the high-concentration CO₂ absorption solution tank 22, then entered the anodic liquid storage tank 32, and finally entered the anode chamber 312 for electrolysis.

A hydrogen evolution reaction occurred in the cathode chamber 311, to obtain H₂, and a cathodic discharge liquid that contained K₂CO₃ and KOH, where a concentration of KOH was increased. The cathodic discharge liquid entered the cathodic discharge liquid tank 34, and returned to the absorption tower 11, to continue capture of low-concentration CO₂. An oxygen evolution reaction occurs in the anode chamber 312, to obtain O₂, CO₂, and a mixed solution of low-concentration K₂CO₃ and medium-concentration KHCO₃. The mixed solution entered the anodic liquid storage tank 32, and then was recycled and entered the anode chamber 312 for electrolysis. The electrolyte diaphragm was a porous polymer diaphragm whose surface was polymerized with a carboxylate ion resin layer.

The first portion of the low-concentration CO₂ absorption solution accounts for 50% of the low-concentration CO₂ absorption solution. The catholyte solution is a mixed solution of 2M K₂CO₃ and 5M KOH. The anolyte solution is a mixed solution of 3M K₂CO₃ and 1M KHCO₃.

### Example 2

Examples 2 to 6 differ from Example 1 in concentrations of ions in the catholyte solution and the anolyte solution. For details, refer to Table 1.

**Table 1**

| | Catholyte solution | | Anolyte solution | |
|---|---|---|---|---|
| | Concentration of carbonate radicals | Concentration of hydroxy radicals | Concentration of carbonate radicals | Concentration of bicarbonate radicals |
| Example 1 | 2 | 5 | 3 | 1 |
| Example 2 | 0.1 | 0.1 | 0.1 | 0.1 |
| Example 3 | 0.5 | 3 | 2 | 0.6 |
| Example 4 | 3 | 7 | 5 | 1.5 |
| Example 5 | 6 | 10 | 6.5 | 3 |
| Example 6 | 6.5 | 11 | 7 | 4 |

### Example 7

Example 7 differs from Example 1 in that the first portion of the low-concentration CO₂ absorption solution accounts for 10% of the low-concentration CO₂ absorption solution.

### Example 8

Example 8 differs from Example 1 in that the first portion of the low-concentration CO₂ absorption solution accounts for 90% of the low-concentration CO₂ absorption solution.

### Comparative Example 1

CO₂ in a wide concentration range was captured by using a KOH aqueous solution, to obtain K₂CO₃ for electrolysis. An ion exchange resin membrane was used as an electrolyte diaphragm. A mixed solution of KHCO₃ and K₂CO₃ and a mixed gas of CO₂ and O₂ were generated in the anode. H₂ and a regenerated KOH solution were obtained in the cathode.

In Examples 1 to 8 and Comparative Examples 1 and 2, electrolysis was performed at current density of 2000 A/m² (Faraday efficiency was 100%). When a capture amount of CO₂ is 1 kg, yields of H₂ and O₂, a regeneration amount of KOH, and energy consumed in electrolysis are shown in Table 2.

**Table 2**

| | Capture amount of CO₂ | Yield of H₂ | Yield of O₂ | Regeneration amount of KOH | Energy consumed in electrolysis |
|---|---|---|---|---|---|
| Example 1 | 1 kg | 0.52 m³ | 0.24 m³ | 2.57 kg | 3.80 kWh |
| Example 2 | 1 kg | 0.46 m³ | 0.26 m³ | 2.35 kg | 4.57 kWh |
| Example 3 | 1 kg | 0.48 m³ | 0.25 m³ | 2.39 kg | 4.42 kWh |
| Example 4 | 1 kg | 0.51 m³ | 0.23 m³ | 2.56 kg | 3.91 kWh |
| Example 5 | 1 kg | 0.47 m³ | 0.26 m³ | 2.37 kg | 5.48 kWh |
| Example 6 | 1 kg | 0.53 m³ | 0.27 m³ | 2.50 kg | 6.55 kWh |
| Example 7 | 1 kg | 0.49 m³ | 0.24 m³ | 2.53 kg | 4.01 kWh |
| Example 8 | 1 kg | 0.52 m³ | 0.23 m³ | 2.49 kg | 3.96 kWh |
| Comparative Example 1 | 1 kg | 0.42 m³ | 0.21 m³ | 2.33 kg | 5.76 kWh |

It can be learned from the above that compared with the Comparative Examples, the examples have the following advantages. Because the method and apparatus for CO₂ capture coupled hydrogen production of the present disclosure were used, CO₂ in a wide concentration range that includes low-concentration CO₂ and high-concentration CO₂ can be absorbed and captured by using an alkaline solution as an absorbent. In addition, a non-ionic diaphragm was used to electrolyze low-concentration CO₂ and high-concentration CO₂, and product absorption coupled hydrogen production was performed, so that an absorption solution can be regenerated, and high-concentration CO₂ as well as additional products of H₂ and O₂ can be obtained. According to the present disclosure, a low-concentration CO₂ absorption solution is used as a catholyte solution, and a high-concentration CO₂ absorption solution is used as an anolyte solution. A concentration increase of CO₃²⁻ in an electrolytic cathode can restrain substance diffusion caused by a concentration difference, so that diffusion of HCO₃⁻ and CO3²⁻ from the electrolytic anode to the cathode is reduced. Moreover, in preference to OH⁻, CO₃²⁻ having more electric charges undergoes electromigration, so that electromigration of CO₃²⁻ to the anode is reduced. No ionic diaphragm may be used, which greatly reduces costs of an electrolytic cell, avoids severe restriction imposed by an ionic diaphragm on the electrolyte solution and the electrolytic cell, and implements recycling of a capture solution and regeneration of an alkaline absorption solution, thereby further reducing CO₂ capture costs. In summary, according to the method of the present disclosure, capture of CO₂ in a wide concentration range can be realized; electrolysis is performed by using a non-ionic diaphragm, to implement regeneration of an absorption solution coupled hydrogen production; capture costs of CO₂ in a wide concentration range can be reduced; additional products of H₂ and O₂ can be obtained; and hydrogen production costs can be reduced.

The above descriptions are merely preferred embodiments of the present disclosure and are not intended to limit the present disclosure, and various changes and modifications may be made to the present disclosure by those skilled in the art. Any modifications, equivalent substitutions, improvements, and the like made within principles of the present disclosure shall be included in the protection scope of the present disclosure

## Claims

1. A method for carbon capture coupled hydrogen production, **characterized by** comprising the following steps:
step S1: capturing low-concentration CO₂ by using a solution of an alkali metal hydroxide, to obtain a low-concentration CO₂ absorption solution, wherein the low-concentration CO₂ absorption solution comprises an alkali metal carbonate and the alkali metal hydroxide;
step S2: dividing the low-concentration CO₂ absorption solution into a first portion of the low-concentration CO₂ absorption solution and a second portion of the low-concentration CO₂ absorption solution; and capturing high-concentration CO₂ by using the first portion of the low-concentration CO₂ absorption solution, to obtain a high-concentration CO₂ absorption solution, wherein the high-concentration CO₂ absorption solution comprises the alkali metal carbonate and an alkali metal bicarbonate; and
step S3: performing electrolysis by using the second portion of the low-concentration CO₂ absorption solution as a catholyte solution, using the high-concentration CO₂ absorption solution as an anolyte solution, and using a non-ionic diaphragm as a diaphragm, to obtain H₂ and a cathodic discharge liquid at an electrolytic cathode, and obtain O₂, CO₂, and an anodic discharge liquid at an electrolytic anode; and performing step S1 by using the cathodic discharge liquid, wherein the cathodic discharge liquid comprises the alkali metal carbonate and the alkali metal hydroxide; and the anodic discharge liquid comprises the alkali metal carbonate and the alkali metal bicarbonate.

2. The method according to claim 1, **characterized in that** the alkali metal hydroxide is KOH, the alkali metal carbonate is K₂CO₃, and the alkali metal bicarbonate is KHCO₃; or
the alkali metal hydroxide is NaOH, the alkali metal carbonate is Na₂CO₃, and the alkali metal bicarbonate is NaHCOs.

3. The method according to claim 1 or 2, **characterized in that** in step S2, the first portion of the low-concentration CO₂ absorption solution accounts for 10% to 90% of the low-concentration CO₂ absorption solution by volume percent.

4. The method according to any one of claims 1 to 3, **characterized in that** step S3 further comprises: performing electrolysis by using the anodic discharge liquid as the anolyte solution,
preferably, a concentration of carbonate radicals in the catholyte solution ranges from 0.1 M to 6 M, and a concentration of hydroxy radicals in the catholyte solution ranges from 0.1 M to 10 M; and more preferably, the concentration of carbonate radicals in the catholyte solution ranges from 0.5 M to 3 M, and the concentration of hydroxy radicals in the catholyte solution ranges from 3 M to 7 M; and
preferably, a concentration of carbonate radicals in the anolyte solution ranges from 0.1 M to 6.5 M, and a concentration of bicarbonate radicals in the anolyte solution ranges from 0.1 M to 3 M; and more preferably, the concentration of carbonate radicals in the anolyte solution ranges from 2 M to 5 M, and the concentration of bicarbonate radicals in the anolyte solution ranges from 0.6 M to 1.5 M.

5. The method according to any one of claims 1 to 4, **characterized in that** the non-ionic diaphragm is one or more of a porous polymer diaphragm, a Zirfon film, a polyphenylene sulfide film, a polysulfone film, or a polyether sulfone film; preferably, the non-ionic diaphragm is the porous polymer diaphragm; and more preferably, a polymer layer on a surface of the porous polymer diaphragm is one or more of a carboxylate ion resin layer, polyphenylene sulfide, polysulfone, or polyether sulfone.

6. An apparatus for carbon capture coupled hydrogen production, **characterized by** comprising:
a low-concentration CO₂ absorption unit (1), having an inlet for a solution of an alkali metal hydroxide, an inlet for a first to-be-captured raw material that comprises low-concentration CO₂, an outlet for a first portion of a low-concentration CO₂ absorption solution, an outlet for a second portion of the low-concentration CO₂ absorption solution, and an outlet for a first exhaust gas, wherein the low-concentration CO₂ absorption unit (1) is configured to capture low-concentration CO₂ by using the solution of the alkali metal hydroxide, to obtain the low-concentration CO₂ absorption solution; and the low-concentration CO₂ absorption solution comprises an alkali metal carbonate and the alkali metal hydroxide;
a high-concentration CO₂ absorption unit (2), having an inlet for the first portion of the low-concentration CO₂ absorption solution, an inlet for a second to-be-captured raw material that comprises high-concentration CO₂, an outlet for a high-concentration CO₂ absorption solution, and an outlet for a second exhaust gas, wherein the inlet for the first portion of the low-concentration CO₂ absorption solution is connected to the outlet for the first portion of the low-concentration CO₂ absorption solution; the high-concentration CO₂ absorption unit (2) is configured to capture high-concentration CO₂ by using the first portion of the low-concentration CO₂ absorption solution, to obtain the high-concentration CO₂ absorption solution; and the high-concentration CO₂ absorption solution comprises the alkali metal carbonate and an alkali metal bicarbonate; and
an electrolysis unit (3), having an inlet for a catholyte solution, a non-ionic diaphragm, an inlet for an anolyte solution, an outlet for a cathodic discharge liquid, an outlet for an anodic discharge liquid, an outlet for H₂, and an outlet for a mixed gas of O₂ and CO₂, wherein the inlet for the catholyte solution is connected to the outlet for the second portion of the low-concentration CO₂ absorption solution; the outlet for the catholyte solution is connected to the inlet for the solution of the alkali metal hydroxide; the inlet for the anolyte solution is connected to the outlet for the high-concentration CO₂ absorption solution; and the electrolysis unit (3) is configured to electrolyze the second portion of the low-concentration CO₂ absorption solution and the high-concentration CO₂ absorption solution, to obtain H₂ and the cathodic discharge liquid at an electrolytic cathode, and obtain O₂, CO₂, and the anodic discharge liquid at an electrolytic anode, wherein the cathodic discharge liquid comprises the alkali metal carbonate and the alkali metal hydroxide; and the anodic discharge liquid comprises the alkali metal carbonate and the alkali metal bicarbonate.

7. The apparatus according to claim 6, **characterized in that**
the low-concentration CO₂ absorption unit (1) comprises a low-concentration absorption tower (11), wherein the inlet for the solution of the alkali metal hydroxide and the outlet for the first exhaust gas are formed in a top of the low-concentration absorption tower (11); and the inlet for the first to-be-captured raw material that comprises low-concentration CO₂, the outlet for the first portion of the low-concentration CO₂ absorption solution, and the outlet for the second portion of the low-concentration CO₂ absorption solution are formed in a bottom of the low-concentration absorption tower (11); and
the high-concentration CO₂ absorption unit (2) comprises a high-concentration absorption tower (21), wherein the inlet for the first portion of the low-concentration CO₂ absorption solution and the outlet for the second exhaust gas are formed in a top of the high-concentration absorption tower (21), and the inlet for the second to-be-captured raw material that comprises high-concentration CO₂ and the outlet for the high-concentration CO₂ absorption solution are formed in a bottom of the high-concentration absorption tower (21).

8. The apparatus according to claim 6 or 7, **characterized in that** the electrolysis unit (3) comprises:
an electrolytic cell (31), having a cathode chamber (311) and an anode chamber (312), wherein the non-ionic diaphragm (313) is disposed between the cathode chamber (311) and the anode chamber (312); the electrolytic cathode is disposed in the cathode chamber (311); the electrolytic anode is disposed in the anode chamber (312); the cathode chamber (311) has the inlet for the catholyte solution, the outlet for the cathodic discharge liquid, and the outlet for H₂; and the anode chamber (312) has the inlet for the anolyte solution, the outlet for the anodic discharge liquid, and the outlet for the mixed gas of O₂ and CO₂.

9. The apparatus according to any one of claims 6 to 8, **characterized in that** the high-concentration CO₂ absorption unit (2) further comprises a high-concentration CO₂ absorption solution tank (22), disposed on a pipeline through which the inlet for the anolyte solution is connected to the outlet for the high-concentration CO₂ absorption solution, and disposed on one side of the outlet for the high-concentration CO₂ absorption solution.

10. The apparatus according to any one of claims 6 to 9, **characterized in that** the electrolysis unit (3) further comprises:
a cathodic feed liquid tank (33), disposed on a pipeline through which the inlet for the catholyte solution is connected to the outlet for the second portion of the low-concentration CO₂ absorption solution; and/or
a cathodic discharge liquid tank (34), disposed on a pipeline through which the outlet for the catholyte solution is connected to the inlet for the solution of the alkali metal hydroxide; and/or
an anodic liquid storage tank (32), disposed on a pipeline through which the inlet for the anolyte solution is connected to the outlet for the high-concentration CO₂ absorption solution, and disposed on one side of the inlet for the anolyte solution.
